# EUROPEAN PATENT APPLICATION

(11) **EP 4 534 602 A1**
(43) Date of publication of application: **09.04.2025**
(21) Application number: 23811998.6
(22) Date of filing: 12.04.2023
(51) Int. Cl.: C08L 67/02, C08L 67/04, C08L 33/12, C08L 33/06

(54) **RESIN COMPOSITION AND MOLDED PRODUCT**

(30) Priority: 25.05.2022 KR 20220064184
(71) Applicant: LG Chem, Ltd., Yeongdeungpo-gu Seoul 07336 (KR)
(72) Inventor: PARK, Sung Eun, Daejeon 34122 (KR); YOO, Ki Hyun, Daejeon 34122 (KR); LEE, Hye Kyong, Daejeon 34122 (KR); LEE, Kwang Jin, Daejeon 34122 (KR)
(74) Representative: Goddar, Heinz J.
(86) International application number: PCT/KR2023/004951
(87) International publication number: WO 2023/229221

(57) **Abstract**

The present invention relates to a biodegradable resin composition including heterogeneous biodegradable resins, which has improved compatibility between the heterogeneous biodegradable resins and thus the resin composition is excellent in processibility by preventing an increase in viscosity while having excellent mechanical properties, and also relates to a biodegradable molded article molded from the biodegradable resin composition.

## Description

### TECHNICAL FIELD

### [CROSS-REFERENCE TO RELATED APPLICATIONS]

This application claims priority from Korean Patent Application No. 10-2022-0064184, filed on May 25, 2022, the disclosure of which is incorporated by reference herein.

### [TECHNICAL FIELD]

The present invention relates to a resin composition and a biodegradable molded article molded therefrom.

### BACKGROUND ART

A thermoplastic resin has excellent mechanical characteristics and chemical characteristics, and thus is used in various fields such as drinking water containers, medical applications, food packaging, food containers, automobile molded articles, and agricultural vinyl.

Among them, since a polyethylene film and the like is excellent in mechanical properties and non-toxic to the human body, and can also be continuously deformed when subjected to heat, the polyethylene film is mainly used as hot sealing bags for food packaging, agricultural mulching films, or the like.

Hot sealing bags for food packaging are widely used in vacuum packaging of food and the like, and the polyethylene film capable of achieving excellent bonding strength even at a low sealing temperature is mainly used for the hot sealing bags for food packaging.

Agricultural mulching films are often used in a mulching farming method. A mulch is a material that covers a surface of the soil when growing crops. When a top surface of the soil is covered with various types of materials, weed growing can be blocked, pests can be prevented, and thus a use of pesticides can be reduced. In addition, it is possible to easily control the temperature of the soil, grow beneficial bacteria in the soil, prevent soil erosion, and retain a soil moisture. Examples of the mulching materials may include rice straws, leaves of crops such as grasses, or a polyolefin-based film, and generally a synthetic resin such as polyethylene films are mainly used.

However, a polyethylene film does not decompose in the natural environment, and also has a limitation in recycling. In particular, recently, a phenomenon in which plastics such as a waste polyethylene film are input into the ocean, and crush into very tiny microplastics due to return current and sunlight in the ocean, is an emerging issue. Over billions to tens of billions of such microplastics in an uncountable amount are known to float in the oceans, are input into the bodies of sea creatures, accumulate in ecosystems, and influence the entire food chain.

Accordingly, in recent days, an interest in biodegradable plastics has been increased. Among the biodegradable plastics, polybutylene adipate terephthalate (hereinafter, referred as PBAT) and polylactic acid (hereinafter, referred as PLA) have been spotlighted as biodegradable plastics, and efforts continue to be made to improve the compatibility of PBAT and PLA in a biodegradable resin composition containing PBAT and PLA at the same time.

A compatibilizer for a biodegradable resin composition containing PBAT and PLA may be classified into a physical compatibilizer and a chemical compatibilizer according to operating principles. As a physical compatibilizer, a compatibilizer using a copolymer containing PBAT or PLA is representative. However, when using such a physical compatibilizer, there is a disadvantage in that mechanical properties are deteriorated since the physical compatibilizer serves a similar role to that of a plasticizer.

The chemical compatibilizer uses a compound including a functional group that reacts with both ends of a polymer, and acts as a chain extender to thereby exhibit characteristics of increased molecular weight. However, there is a disadvantage in that when the reaction of the functional group occurs excessively, the viscosity of the resin composition is rapidly increased to make it difficult to be processed. Therefore, it is general to use a conventional chemical compatibilizer in an extremely limited amount in a resin composition.

Meanwhile, Patent Registration No. 10-2045863 (Patent Document 1) discloses a biodegradable polyester film including an epoxy group and containing a copolymer in which styrene, acrylic acid ester and/or methacrylic acid ester are/is used as a base material. When the copolymer disclosed in Patent Document 1 is used as a compatibilizer of PBAT and PLA, use of a specific amount or more of the copolymer causes disadvantages that not only PBAT-g-PLA is formed at an interface between PBAT and PLA but also PBAT-g-PBAT and/or PLA-g-PLA are formed in a large amount in each resin, thus resulting in a rapid increase in the viscosity of the resin composition. Since it is difficult to control such a rapid increase in viscosity during processing of the resin composition, expansion of an application of the resin composition is limited. Therefore, it is important to secure a compatibilizer capable of securing processability by controlling the increase in viscosity within an appropriate range while maintaining the performance as a chemical compatibilizer in a biodegradable resin composition including heterogeneous biodegradable resins.

### PRIOR ART DOCUMENTS

### [Patent Document]

(Patent Document 1) KR 10-2045863 B1

### DISCLOSURE OF THE INVENTION

### TECHNICAL PROBLEM

The present invention has been made to solve the problems of the conventional art, and provides a biodegradable resin composition including heterogeneous biodegradable resins, wherein a melt index and number of domains of a dispersed phase are adjusted by improving the compatibility between the heterogeneous biodegradable resins, and thus an increase in viscosity is prevented while improving mechanical properties.

That is, an objective of the present invention is to provide a biodegradable resins composition including heterogeneous biodegradable resins, wherein a melt index and number of domains of a dispersed phase are adjusted by the improved compatibility, and thus the resins composition is excellent even in processibility by preventing an increase in viscosity while having improved mechanical properties.

In addition, another objective of the present invention is to provide a molded article which is molded from the resin composition and exhibits biodegradability.

### TECHNICAL SOLUTION

To solve the above-described limitations, the present invention provides a resin composition and a molded article.
(1) The present invention provides a resin composition including a continuous phase and a dispersed phase, wherein the continuous phase includes a first biodegradable resin, the dispersed phase includes a second biodegradable resin, a melt flow ratio, as measured with a load of 5 kg at 190 °C according to ISO 1133 is 3.0 g/10 min to 13.5 g/10 min, and number of domains of a dispersed phase is 35 or more, when observing an image obtained by image-capturing at a magnification of 25,000 using transmission electron microscope (TEM).
(2) In (1) above of the present invention, there is provided the resin composition, wherein the first biodegradable resin includes an aliphatic polyester unit and an aromatic polyester unit.
(3) In any one of (1) or (2) above of the present invention, there is provided the resin composition, wherein the first biodegradable resin includes polybutylene adipate terephthalate.
(4) In any one of (1) to (3) above of the present invention, there is provided the resin composition, wherein the second biodegradable resin includes polylactic acid.
(5) In any one of (1) to (4) above of the present invention, there is provided the resin composition, wherein, with respect to 100 parts by weight of a sum of the first biodegradable resin and the second biodegradable resin, the first biodegradable resin is included in an amount of 50 part by weight to 90 parts by weight, and the second biodegradable resin is included in an amount of 10 parts by weight to 50 parts by weight.
(6) In any one of (1) to (5) above of the present invention, there is provided the resin composition, wherein a melt flow ratio of the resin composition is 4.5 g/10 min to 12.0 g/10 min, as measured with a load of 5 kg at 190 °C according to ISO 1133.
(7) In any one of (1) to (6) above of the present invention, there is provided the resin composition, wherein a domain size of the dispersed phase observed in an image by image-capturing at a magnification rate of 25,000 using transmission electron microscope (TEM) is 700 nm or less.
(8) In any one of (1) to (7) above of the present invention, there is provided the resin composition, wherein a melting enthalpy (ΔHm) as measured using a differential scanning calorimeter (DSC) by adding 8 mg (error range of 1 mg) of a sample, primarily heating up to 180 °C at a temperature increase rate of 10 °C/min under a nitrogen stream, then cooling to -50 °C at a temperature decrease rate of 10 °C/min, and secondarily heating up to 180 °C at a heating rate of 10 °C/min, is 0.01 J/g to 3.6 J/g.
(9) In any one of (1) to (8) above of the present invention, there is provided the resin composition, wherein a weight average molecular weight of the entire resin composition is 137,000 to 200,000.
(10) In any one of (1) to (9) above of the present invention, there is provided the resin composition, wherein a tensile strength of the resin composition, as measured at a tensile speed of 50 mm/min according to ASTM D638 is 245 kgf/cm² to 500 kgf/cm²
(11) In (1) to (10) above of the present invention, there is provided the resin composition further including at least one among an acryl-based copolymer and a compatibilized part derived from the acryl-based copolymer.
(12) In any one of (1) to (11) above of the present invention, there is provided the resin composition, wherein the acryl-based copolymer may include a methyl (meth)acrylate monomer unit, a (meth)acrylate monomer unit containing an epoxy group, and an alkyl (meth)acrylate-based monomer unit having 2 to 10 carbon atoms.
(13) In any one of (1) to (12) above of the present invention, there is provided the resin composition, wherein the acryl-based copolymer includes 25 wt% to 65 wt% of a methyl (meth)acrylate monomer unit, 15 wt% to 60 wt% of a (meth)acrylate monomer unit containing an epoxy group, and 5 wt% to 32 wt% of an alkyl (meth)acrylate-based monomer unit having 2 to 10 carbon atoms.
(14) In any one of (1) to (13) above of the present invention, there is provided the resin composition, wherein, with respect to 100 parts by weight of a sum of the first biodegradable resin and the second biodegradable resin, the acryl-based copolymer and the compatibilized part derived from the acryl-based copolymer are included in an amount of 0.01 part by weight to 10 parts by weight.
(15) In any one of (1) to (14) above of the present invention, there is provided the resin composition, wherein an epoxy equivalent weight (E.E.W) of the acryl-based copolymer is 200 g/eq to 800 g/eq.
(16) In any one of (1) to (15) above of the present invention, there is provided the resin composition, wherein a weight average molecular weight of the acryl-based copolymer is 10,000 to 100,000.
(17) In any one of (1) to (16) above of the present invention, there is provided the resin composition, wherein a glass transition temperature of the acryl-based copolymer is 45 °C to 85 °C.
(18) The present invention provides a molded article molded from the resin composition in any one of (1) to (17).

### ADVANTAGEOUS EFFECTS

A resin composition of the present invention includes heterogeneous biodegradable resins, wherein a melt flow ratio and number of domains of a dispersed phase are adjusted by improving the compatibility between the heterogeneous biodegradable resins, and thus the resin composition is excellent in the processibility by preventing an increase in viscosity while improving mechanical properties.

In addition, a molded article of the present invention, which is molded from the resin composition, has excellent mechanical properties and exhibits biodegradability.

### BRIEF DESCRIPTION OF THE DRAWINGS

FIG. 1 is an image which is obtained by image-capturing a resin composition prepared according to Example 2 of the present invention at a magnification of 25,000 using a transmission electron microscope.
FIG. 2 is an image of the domains marked for counting number of domains and measuring the size of the domains in a transmission electron microscopy image of Example 2 of the present invention.
FIG. 3 is an image which is obtained by image-capturing a resin composition prepared according to Comparative Example 1 of the present invention at a magnification of 25,000 using a transmission electron microscope.
FIG. 4 is an image of the domains marked for counting number of domains and measuring the size of the domains in a transmission electron microscopy image of Comparative Example 1 of the present invention.

### MODE FOR CARRYING OUT THE INVENTION

Hereinafter, the present invention will be described in more detail to help understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

As used herein, the term 'a monomer unit' may represent a component, a structure, or a material itself, derived from a monomer, and may mean, for specific example, a repeating unit formed in a polymer by participation of input monomers in a polymerization reaction.

As used herein, the term 'a composition' includes not only reaction products and decomposition products formed from materials of the corresponding composition, but also a mixture of materials including the corresponding composition.

The present invention provides a resin composition.

The resin composition may be a biodegradable resin composition including heterogeneous biodegradable resins. For specific example, the resin composition may include a continuous phase and a dispersed phase, the continuous phase may include a first biodegradable resin, the dispersed phase may include a second biodegradable resin, a melt flow ratio may be 3.0 g/10 min to 13.5 g/10 min, as measured with a load of 5 kg at 190 °C according to ISO 1133, and number of domains may be 35 or more, when observing an image obtained by image-capturing at a magnification of 25,000 using transmission electron microscope (TEM).

The resin composition may be in a form in which a dispersed phase formed by including the second biodegradable resin is dispersed in a continuous phase formed by including the first biodegradable resin. The first biodegradable resin and the second biodegradable resin may be different in types from each other, and any resin known as a biodegradable resin may be used. For specific example, the first degradable resin may be a polyester-based resin containing an aliphatic polyester unit and an aromatic polyester unit. For more specific example, the first biodegradable resin may include polybutylene adipate terephthalate (PBAT). PBAT is a random copolymer of an adipic acid, 1,4-butanediol and terephthalic acid, and is proposed as an alternative biodegradable resin to low-density polyethylene. Particularly, the PBAT may secure mechanical properties from an aromatic polyester unit formed by a terephthalic acid and 1,4-butanediol while securing biodegradability from an aliphatic polyester unit formed by adipic acid and 1,4-butanediol.

Any biodegradable resin different from the first biodegradable resin may be used as the second biodegradable resin, and the second biodegradable resin may include, for specific example, polylactic acid (PLA). PLA corresponds to an eco-friendly biodegradable resin produced from biomaterials and naturally decomposed into water and carbon dioxide within a few months by an action of microorganisms.

The resin composition may include, with respect to 100 parts by weight of the sum of the first biodegradable resin and the second biodegradable resin, the first biodegradable resin in an amount of 50 parts by weight to 90 parts by weight. For specific example, the resin composition may include, with respect to 100 parts by weight of the sum of the first biodegradable resin and the second biodegradable resin, the first biodegradable resin in amount of 50 parts by weight or more, 55 parts by weight or more, 60 parts by weight or more, 65 parts by weight or more, or 70 parts by weight or more, and 90 parts by weight or less, 85 parts by weight or less, or 80 parts by weight or less. Within this range, the mechanical properties and the processibility may be more excellent.

The resin composition may include, with respect to 100 parts by weight of the sum of the first biodegradable resin and the second biodegradable resin, the second biodegradable resin in amount of 10 parts by weight to 50 parts by weight. For specific example, the resin composition may include, with respect to 100 parts by weight of the sum of the first biodegradable resin and the second biodegradable resin, the second biodegradable resin in amount of 10 parts by weight or more, 15 parts by weight or more, or 20 parts by weight or more, and 50 parts by weight or less, 45 parts by weight or less, 40 parts by weight or less, 35 parts by weight or less, or 30 parts by weight or less. Within this range, the mechanical properties and the processibility may be more excellent.

A melt flow ratio of the resin composition is 3.0 g/10 min to 13.5 g/10 min, as measured with a load of 5 kg at 190 °C according to ISO 1133,. The melt flow ratio represents the viscosity, which is one of indicators indicating compatibility between heterogeneous biodegradable resins, and when the viscosity of the resin composition increase, the melt flow ratio is lowered. That is, the low melt flow ratio means the high viscosity. When the melt flow ratio is low, the viscosity increases, and thus the processibility may be lowered. An epoxy group of the acryl-based copolymer, as will be described below, may react with a carboxylic acid group of polybutylene adipate terephthalate and/or polylactic acid. In this case, when the reaction occurs at an interface between the polybutylene adipate terephthalate and/or polylactic acid, a polymerized form of a graft polymer such as polybutylene adipate terephthalate-g-polylactic acid (PBAT-g-PLA) is formed, thereby improving compatibility between polybutylene adipate terephthalate and polylactic acid by enhancing an interfacial adhesion. That is, it indicates that, when the melt flow ratio falls within the range defined in the present invention, the graft polymer such as polybutylene adipate terephthalate-g-polylactic acid (PBAT-g-PLA) is formed within an appropriate range. For specific example, the melt flow ratio of the resin composition, as measured at 190 °C with a load of 5 kg according to ISO 1133, may be 3.0 g/10 min or more, 3.5 g/10 min or more, 4.0 g/10 min or more, 4.5 g/10 min or more, or 4.8 g/10 min or more, and, 13.5 g/10 min or less, 13.4 g/10 min or less, 13.3 g/10 min or less, 13.2 g/10 min or less, 13.1 g/10 min or less, 13.0 g/10 min or less, 12.9 g/10 min or less, 12.8 g/10 min or less, 12.7 g/10 min or less, 12.6 g/10 min or less, 12.5 g/10 min or less, 12.4 g/10 min or less, 12.3 g/10 min or less, 12.2 g/10 min or less, 12.1 g/10 min or less, 12.0 g/10 min or less, 11.9 g/10 min or less, 11.8 g/10 min or less, or 11.7 g/10 min or less. Within this range, the compatibility between heterogeneous biodegradable resins is improved, and thus the resin composition is more excellent in processibility by preventing an increase in viscosity while having improved mechanical properties.

The number of domains of the dispersed phase of the resin composition may be 35 or more, when observing an image obtained by image-capturing at a magnification of 25,000 using transmission electron microscope (TEM). When observing the resin compositions using the transmission electron microscope, the dispersed phase including the second biodegradable resin forms domains in the continuous phase including the first biodegradable resin. In this case, the number of domains of the dispersed phase dispersed in the same continuous phase varies depending on compatibility of the first biodegradable resin and the second biodegradable resin. That is, as the compatibility between the first biodegradable resin and the second biodegradable resin is excellent, the number of domains of the dispersed phase dispersed in the same continuous phase increases. For specific example, in the resin composition, the number of domains of the dispersed phase may be 35 or more, 40 or more, 45 or more, 50 or more, 55 or more, 60 or more, 65 or more, 70 or more, 75 or more, 80 or more, 85 or more, 90 or more, 95 or more, or 100 or more, when observing the image obtained by image-capturing at a magnification of 25,000 using the transmission electron microscope (TEM). An upper limit is not specifically limited, but may be 1,000 or less, 900 or less, 800 or less, 700 or less, 600 or less, 500 or less, 400 or less, 300 or less, 200 or less, or 150 or less. Within this range, the compatibility between the heterogeneous biodegradable resins is improved, and thus the resin composition is further excellent in the processibility by preventing an increase in viscosity while having improved mechanical properties. Herein, the image obtained by image-capturing at a magnification of 25,000 using the transmission electron microscope (TEM) may be an image having a size of 3.4 µm in width (minor axis) and 4.9 µm in length (major axis). In addition, when counting the number of domains in the image obtained by image-capturing at magnification of a 25,000 using the transmission electron microscope (TEM), the domain to be counted may be a domain exhibiting brightness of 9 or more among domains having a long diameter of 150 nm or more in the transmission electron microscopy image, where the brightness is divided into black as 0, and white as 10. The domain size is an arithmetic average value of the sizes with respect to the major axis of each domain. For specific example, the domain may be polylactic acid, and a matrix, which is the continuous phase, may be polybutylene adipate terephthalate. The properties of the domain may be estimated through a difference in a glass transition temperature and a difference in melt viscosity between polylactic acid and polybutylene adipate terephthalate. For more specific example, since the glass transition temperature of polybutylene adipate terephthalate is a low temperature (about -30 °C) while a glass transition temperature of polylactic acid is a high temperature (about 60 °C), the domain may have morphological properties that appear due to an obvious difference in flowability of the two resins under same processing conditions. In addition, polylactic acid, which is a dispersed phase observed in the image obtained through the transmission electron microscope, is confirmed in a bright color, through which it may be estimated that the effect by a transmitted beam is stronger than that of a polybutylene adipate terephthalate resin.

The domain size of the dispersed phase may be 700 nm or less, when observing in an image obtained by image-capturing at a magnification of 25,000 using the transmission electron microscope (TEM). The domain size of the dispersed phase dispersed in the same continuous phase varies depending on the compatibility of the first biodegradable resin and the second biodegradable resin. That is, the more excellent the compatibility of the first biodegradable resin and the second biodegradable resin, the smaller the domain size of the dispersed phase dispersed in the same continuous phase. For specific example, the resin composition may have the domain size of 700 nm or less, 650 nm or less, 500 nm or less, 450 nm or less, or 400 nm or less, when observing in an image obtained by image-capturing at a magnification of 25,000 using transmission electron microscope (TEM). The lower limit of the domain size is not particularly limited, but may be 10 nm or more, 50 nm or more, 100 nm or more, 150 nm or more, or 200 nm or more. Within this range, the compatibility between heterogeneous biodegradable resins is improved, and thus the resin composition is excellent in the processibility by preventing an increase in viscosity while having mechanical properties. Herein, the size of the image and the criteria for selecting the domain are the same as those described above. It may mean that the domain size with respect to each major axis of domains of the dispersed phase falls within the above range, as observed in the image obtained by image-capturing at a magnification of 25,000 using the transmission electron microscope (TEM), or the arithmetic average value of the domain sizes falls within the above range.

A melting enthalpy (ΔHm) of the resin composition is 0.01 J/g to 3.6 J/g, as measured using a differential scanning calorimeter (DSC) by adding 8 mg (error range of 1 mg) of a sample, primarily heating up to 180 °C at a temperature increase rate of 10 °C/min under a nitrogen stream, then cooling to -50 °C at a temperature decrease rate of 10 °C/min, and secondarily heating up to 180 °C at a temperature increase rate of 10 °C/min. The melting enthalpy (ΔHm) is, in addition to the melt flow ratio, an indicator representing the compatibility between heterogeneous biodegradable resins, and for specific example, may represent a melting enthalpy (ΔHm) formed during a cold crystallization process of the second biodegradable resin, and for more specific example, a melting enthalpy (ΔHm) formed during a cold crystallization process of polylactic acid. When the resin composition includes heterogeneous biodegradable resins, crystallinity of the second biodegradable resin decrease due to the compatibility therebetween, and thus is manifested as a decrease in a cold crystallization peak and a decrease in the melting enthalpy. Thus, the melting enthalpy (ΔHm) is measured with respect to the degree of cold crystallinity, which varies depending on the compatibility between the heterogeneous biodegradable resins in the resin composition. The lower melting enthalpy (ΔHm) indicates excellent compatibility between the heterogeneous biodegradable resins of the resin composition. For specific example, the melting enthalpy (ΔHm) of the resin composition may be 0.01 J/g or more, 0.02 J/g or more, 0.03 J/g or more, 0.04 J/g or more, 0.05 J/g or more, 0.06 J/g or more, 0.07 J/g or more, 0.08 J/g or more, 0.09 J/g or more, or 0.1 J/g or more, and 3.6 J/g or less, or 3.5 J/g or less, as measured using a differential scanning calorimeter (DSC) by adding 8 mg (error range of 1 mg) of a sample, primarily heating up to 180 °C at a temperature increase rate of 10 °C/min under a nitrogen stream, then cooling to -50 °C at a temperature decrease rate of 10 °C/min, and secondarily heating up to 180 °C at a temperature increase rate of 10 °C/min. Within this range, the compatibility between heterogeneous biodegradable resins is improved, and thus the resin composition is more excellent in processibility by preventing an increase in viscosity while having improved mechanical properties.

In the resin composition, a weight average molecular weight of the entire resin composition may be 137,000 to 200,000. For specific example, the weight average molecular weight of the entire resin composition may be 137,000 or more, 137,500 or more, or 138,000 or more, and 200,000 or less, 195,000 or less, 190,000 or less, 185,000 or less, 180,000 or less, 175,000 or less, 170,000 or less, 165,000 or less, 160,000 or less, or 159,000 or less. Within this range, in the heterogeneous biodegradable resin, particularly, in polybutylene adipate terephthalate and/or a polylactic acid, a graft polymer such as polybutylene adipate terephthalate-g-polylactic acid (PBAT-g-PLA) is formed at an appropriate level, and thus the tensile strength of the resin composition may be further improved even though the molecular weight is increased. The weight average molecular weight may be expressed without a unit but may be expressed in units of g/mol depending on the molar mass.

The tensile strength of the resin composition is 245 kgf/cm² to 500 kgf/cm², as measured at a tensile speed of 50 mm/min according to ASTM D638. For specific example, the tensile strength of the resin composition may be 245 kgf/cm² or more, 250 kgf/cm² or more, 255 kgf/cm² or more, or 260 kgf/cm² or more, and 500 kgf/cm² or less, 490 kgf/cm² or less, 480 kgf/cm² or less, 470 kgf/cm² or less, 460 kgf/cm² or less, 450 kgf/cm² or less, 440 kgf/cm² or less, 430 kgf/cm² or less, 420 kgf/cm² or less, or 415 kgf/cm² or less, as measured according to ASTM D638.

An elongation of the resin composition may be 400 % or more, as measured according to ASTM D638. For specific example, the elongation of the resin composition may be, 400 % or more, 410 % or more, 420 % or more, 430 % or more, 440 % or more, 450 % or more, 460 % or more, 470 % or more, 480 % or more, 490 % or more, 500 % or more, 510 % or more, 520 % or more, 530 % or more, 540 % or more, 550 % or more, 560 % or more, 570 % or more, 580 % or more, or 590 % or more, and 700 % or less, 690 % or less, 680 % or less, 670 % or less, or 665 % or less, as measured according to ASTM D638.

The resin composition may further include at least one among an acryl-based copolymer and a compatibilized part derived from the acryl-based copolymer.

The acryl-based copolymer may be a copolymer containing a reactive functional group such as an epoxy group, and thus may be included as a chemical compatibilizer for improving the compatibility of PBAT and PLA in the resin composition. The acryl-based copolymer may exist as it is in the resin composition, may also exist in the form of a compatibilized part through a chemical bonding by the reaction of a reactive functional group with the first biodegradable resin and the second biodegradable resin, or the aforementioned two forms may coexist.

The acryl-based copolymer may be an acryl-based copolymer copolymerized by including a methyl (meth)acrylate monomer, a (meth)acrylate monomer containing an epoxy group, and an alkyl (meth) acrylate-based monomer having 2 to 10 carbon atoms. The acryl-based copolymer may be, for specific example, a random copolymer or a linear random copolymer, copolymerized by including a methyl (meth)acrylate monomer, a (meth)acrylate monomer containing an epoxy group, and an alkyl (meth)acrylate monomer having 2 to 10 carbon atoms. Herein, '(meth)acrylate ' is meant to include both acrylate and methacrylate.

The acryl-based copolymer may include a methyl (meth)acrylate monomer unit in an amount of 25 wt% to 65 wt%. For specific example, the acryl-based copolymer may include a methyl(meth)acrylate monomer unit formed from a methyl (meth)acrylate monomer, in an amount of 25 wt% or more, 30 wt% or more, 35 wt% or more, or 40 wt% or more, and in an amount of 65 wt% or less, 60 wt% or less, 55 wt% or less, or 50 wt% or less. The acryl-based copolymer may have excellent miscibility with the second biodegradable resin and relatively good affinity with the first biodegradable resin, within this range, and thus the compatibility between the first biodegradable resin and the second biodegradable resin may be further improved.

The acryl-based copolymer may include a (meth)acrylate monomer unit containing an epoxy group, formed from a (meth) acrylate monomer containing an epoxy group, in an amount of 15 wt% to 60 wt%. For specific example, the acryl-based copolymer may include the (meth)acrylate monomer unit containing an epoxy group, formed from the (meth)acrylate monomer containing an epoxy group, in an amount of 15 wt% or more, 20 wt% or more, 25 wt% or more, 30 wt% or more, 35 wt% or more, or 40 wt% or more, and in an amount of 60 wt% or less, 55 wt% or less, 50 wt% or less, or 45 wt% or less. Within this range, the flexibility of a polymer chain may increase, the compatibility between the first biodegradable resin and the second biodegradable resin may be further improved, and particularly, when a film is prepared from the resin composition, chain diffusion and entanglement at an interface between films may increase.

The (meth) acylate monomer containing an epoxy group may be a (meth) acylate monomer containing a glycidyl group, and for specific example, may be a glycidyl (meth)acrylate monomer. In the (meth)acrylate monomer containing an epoxy group, the epoxy group included in the monomer may react with a hydroxy group (-OH) or a carboxylic acid group (-COOH) included in the first biodegradable resin or the second biodegradable resin, and thus a function as a chemical compatibilizer may be imparted. In addition, when the reaction occurs at the interface between the first biodegradable resin and the second biodegradable resin, compatibility and interfacial adhesion between the first biodegradable resin and the second biodegradable resin may be further improved.

The acryl-based copolymer may include an alkyl (meth) acrylate-based monomer unit having 2 to 10 carbon atoms, formed from an alkyl (meth)acrylate-based monomer having 2 to 10 carbon atoms in an amount of 5 wt% to 32 wt%. For specific example, the acryl-based copolymer may include an alkyl (meth) acrylate-based monomer unit having 2 to 10 carbon atoms, formed from the alkyl (meth)acrylate-based monomer having 2 to 10 carbon atoms, in an amount of 5 wt% or more, 10 wt% or more, or 15 wt% or more, and in an amount of 32 wt% or less, 31 wt% or less, 30 wt% or less, 25 wt% less, or 20 wt% or less. Within this range, the flexibility of a polymer chain may be increase d, the compatibility between the first biodegradable resin and the second biodegradable resin may be further improved, and particularly, when films are prepared from the resin composition, chain diffusion and entanglement at an interface between films may increase.

The alkyl (meth)acrylate-based monomer having 2 to 10 carbon atoms may be at least one selected from the group consisting of ethyl (meth)acrylate, n-propyl (meth)acrylate, iso-propyl (meth)acrylate, n-butyl (meth)acrylate, iso-butyl (meth)acrylate, t-butyl (meth)acrylate, pentyl (meth)acrylate, hexyl (meth)acrylate, heptyl (meth)acrylate, octyl (meth)acrylate, iso-octyl (meth)acrylate, 2-ethylhexyl (meth)acrylate, decyl (meth)acrylate, iso-decyl (meth)acrylate, dodecyl (meth)acrylate, iso-bornyl (meth)acrylate and lauryl (meth)acrylate. The alkyl (meth)acrylate-based monomer having 2 to 10 carbon atoms may be, for specific example, an alkyl (meth)acrylate-based monomer having 3 to 9 or 4 to 8 carbon atoms, and may be, for more specific example, at least one selected from the group consisting of butyl (meth)acrylate and 2-ethylhexyl (meth)acrylate.

The acryl-based copolymer may be prepared through emulsion polymerization of a polymerization composition including a polymerization initiator, an emulsifier, and a monomer mixture containing the methyl (meth)acrylate monomer, the (meth)acrylate monomer containing an epoxy group, and the alkyl (meth)acrylate monomer having 2 to 10 carbon atoms.

During the polymerization of the acryl-based copolymer, the polymerization may be performed at different polymerization temperatures for different polymerization times, as needed, and may be performed, for specific example, in the polymerization temperature range of 50 °C to 200 °C, for a polymerization time of 0.5 hours to 20 hours.

The polymerization initiator may be an inorganic or organic peroxide, and may be, for specific example, a watersoluble polymerization initiator including potassium persulfate, sodium persulfate, ammonium persulfate, and the like, and an oil-soluble polymerization initiator including cumene hydroperoxide, benzoyl peroxide, and the like.

An activator may be used together with the polymerization initiator to promote triggering of the reaction of the peroxide, and at least one selected from the group consisting of sodium formaldehyde sulfoxylate, sodium ethylenediaminetetraacetate, ferrous sulfate, and dextrose may be used as the activator.

The polymerization initiator may be added in an amount of 0.1 part by weight to 10 parts by weight, and may be added, for specific example, in an amount of 0.1 part by weight to 5 parts by weight, with respect to 100 parts by weight of the monomer mixture on the dry basis.

The polymerization may be performed by further including a chain transfer agent (or, a chain-transferring agent) in terms of increasing an efficiency of the polymerization reaction. The chain transfer agent may serve to introduce homopolymers, which are polymers composed of only one type of monomers, into a micelle during a polymerization process. The chain transfer agent may be a linear or branched alkylthiol compound having 5 to 20 carbon atoms, and may be, for specific example, hexanethiol, cyclohexanethiol, adamantanethiol, heptanethiol, octanethiol, nonanethiol, decanethiol, undecanethiol, dodecanethiol, hexadecanethiol, octadecanethiol, etc. In addition, the chain transfer agent may be added, in terms of dry weight, with respect to 100 parts by weight of the monomer mixture, in an amount of 0.1 part by weight to 10 parts by weight, and may be added, for specific example, in an amount of 0.1 part by weight to 5 parts by weight.

The emulsion polymerization may be performed by including steps(S10) to (S30).

(S10) step: preparing an emulsion by dispersing an emulsifier in a solvent.

(S20) step: preparing a pre-emulsion by mixing a monomer mixture containing monomer components and an emulsifier, etc.

(S30) step: mixing the emulsion prepared in the step (S10) and the pre-emulsion prepared in the step (S20) and performing an emulsion polymerization, in the presence of a polymerization initiator.

The emulsion polymerization for polymerizing the acryl-based copolymer may be performed according to the steps (S10) to (S30).

First, in step (S10), an emulsion including an emulsifier is prepared. This step is a separate step from a pre-emulsion preparing process below. As the emulsifier, an anionic emulsifier may be used alone, or an anionic emulsifier, a cationic emulsifier, and a nonionic emulsifier may be used together, and an emulsion may be prepared by mixing the emulsifier component and a solvent such as water. In the preparing process of the emulsion, initial micelle particles of several nanometers in size may be stably formed. Step (S20) is a preparing step of a pre-emulsion including the monomer mixture, in which the pre-emulsion is prepared by mixing each above-mentioned monomer, an emulsifier, etc., with water. In this case, also, as an emulsifier, an anionic emulsifier may be used alone, or an anionic emulsifier, and a nonionic emulsifier may be used together. In this process, nano-sized latex particles may be formed in the pre-emulsion. That is, the above-mentioned emulsifier may be used in the emulsifier preparing step, and/or the pre-emulsion preparing step. In step (S30), after inputting a polymerization initiator into the emulsion thus prepared, the pre-emulsion and the polymerization initiator are continuously input for a predetermined time at equal proportions.

An amount of the polymerization initiator input into the emulsion may be greater than 0 part by weight and equal to or less than 1 part by weight with respect to 100 parts by weight of the monomer mixture, an amount of the polymerization initiator input together with the pre-emulsion may be 0.1 part by weight to 2 parts by weight with respect to 100 parts by weight of the monomer mixture, and the continuously input time may be about 3 hours to about 7 hours. Through this process, monomers or polymers suspended in the pre-emulsion may be input into the initial particles formed in the emulsion. Products of this reaction may then undergo a heat polymerization process in the presence of an additional polymerization initiator, and through this process, residual monomers are polymerized. In this case, 0.1 parts by weight to 10 parts by weight of the polymerization initiator with respect to 100 parts by weight of the monomer mixture may be further input, and the heat polymerization may be performed at a temperature of about 75 °C to about 85 °C for about 40 minutes to about 80 minutes. Such an emulsion polymerization method is dualized into an emulsion preparation process and a pre-emulsion preparation process, and may proceed later with a simple method of mixing the pre-emulsion with the emulsion, thereby improving the process stability and the productivity compared to conventional methods.

The emulsifier used in the emulsion polymerization may include at least one selected from the group consisting of an anionic emulsifier, a cationic emulsifier, and a nonionic emulsifier. The emulsifier is a material having both a hydrophilic group and a hydrophobic group, forms a micelle structure during emulsion polymerization, and allowing polymerization of each monomer to occur inside the micelle structure. An emulsifier commonly used in emulsion polymerization may be classified into an anionic emulsifier, a cationic emulsifier, and a nonionic emulsifier, and the like, and two or more types of emulsifiers may be mixed and used in terms of polymerization stability in the emulsion polymerization. For specific example, the nonionic emulsifier may include at least one selected from the group consisting of polyethylene oxide alkyl aryl ether, polyethylene oxide alkyl amine, and polyethylene oxide alkyl ester. In addition, the anionic emulsifier may include at least one selected from the group consisting of sodium alkyl diphenyl ether disulfonate, sodium polyoxyethylene alkyl ether sulfate, sodium polyoxyethylene aryl ether sulfate, sodium alkyl sulfate, sodium alkyl benzene sulfonate, and dialkyl sodium sulfosuccinate. These may be used alone or used as a mixture of two or more, and may be more effective when used as a mixture of an anionic emulsifier and a nonionic emulsifier. In addition, the emulsifier may be used in an amount of about 0.1 part by weight to about 10 parts by weight, or about 1 part by weight to about 5 parts by weight, with respect to 100 parts by weight of the total monomer components used in preparation of the latex particles.

The composition for polymerization may further include an aqueous solvent such as water in addition to the emulsifier or the monomer components. In this case, the aqueous solvent may be used, in terms of the stability and the viscosity control of the latex particles, in an amount of about 10 parts by weight to 1,000 parts by weight with respect to 100 parts by weight of the latex particles, and may be used such that the total solid content (TSC) is adjusted to about 10 wt% to about 60 wt% with respect to the total amount of the composition.

The resin composition may include, with respect to 100 parts by weight of the sum of the first biodegradable resin and the second biodegradable resin, the acryl-based copolymer and the compatibilized part derived from the acryl-based copolymer in an amount of 0.01 part by weight to 10.0 parts by weight. For specific example, the resin composition may include, with respect to 100 parts by weight of the sum of the first biodegradable resin and the second biodegradable resin, the acryl-based copolymer and the compatibilized part derived from the acryl-based copolymer in an amount of 0.01 part by weight or more, 0.02 part by weight or more, 0.03 part by weight or more, 0.04 part by weight or more, 0.05 part by weight or more, 0.06 part by weight or more, 0.07 part by weight or more, 0.08 part by weight or more, 0.09 part by weight or more, or 0.1 part by weight or more, and in an amount of 10.0 parts by weight or less, 9.0 parts by weight or less, 8.0 parts by weight or less, 7.0 parts by weight or less, 6.0 parts by weight or less, 5.0 parts by weight or less, 4.5 parts by weight or less, 4.0 parts by weight or less, 3.5 parts by weight or less, 3.0 parts by weight or less, 2.5 parts by weight or less, 2.0 parts by weight or less, 1.5 parts by weight or less, or 1.0 parts by weight or less. Within this range, the compatibility between the heterogeneous biodegradable resins may be further improved, and thus the resin composition may be more excellent in the processibility by preventing an increase in viscosity while having further improved mechanical properties.

The acryl-based copolymer may have an epoxy equivalent weight (E.E.W) of 200 g/eq to 800 g/eq. For specific example, the epoxy equivalent weight (E.E. W) of the acryl-based copolymer may be 200 g/eq or more, 210 g/eq or more, 220 g/eq or more, 230 g/eq or more, 240 g/eq or more, 250 g/eq or more, 260 g/eq or more, 270 g/eq or more, 280 g/eq or more, 290 g/eq or more, 300 g/eq or more, 310 g/eq or more, 320 g/eq or more, 330 g/eq or more, 340 g/eq or more, or 350 g/eq or more, and 800 g/eq or less, 700 g/eq or less, 600 g/eq or less, 500 g/eq or less, 490 g/eq or less, 480 g/eq or less, 470 g/eq or less, 460 g/eq or less, 450 g/eq or less, 440 g/eq or less, 430 g/eq or less, 420 g/eq or less, 410 g/eq or less, 400 g/eq or less, 390 g/eq or less, 380 g/eq or less, 370 g/eq or less, or 360 g/eq or less. Within this range, the compatibility between heterogeneous biodegradable resins may be further improved. Particularly, when the biodegradable resin is a polyester-based resin, a reaction with a hydroxy group or a carboxylic acid group of the polyester-based resin is effectively carried out, and thus the performance as a chemical compatibilizer may be further improved.

The acryl-based copolymer may have a weight average molecular weight of 10,000 to 100,000. For specific example, the acryl-based copolymer may have a weight average molecular weight of 10,000 or more, 15,000 or more, 20,000 or more, 25,000 or more, or 30,000 or more, and a weight average molecular weight of 100,000 or less, 90,000 or less, 80,000 or less, 70,000 or less, 60,000 or less, 50,000 or less, or 40,000 or less. Within this range, an action as a chemical compatibilizer may be more excellent without compromising inherent properties of a heterogeneous biodegradable resin, particularly, a polyester-based resin. The weight average molecular weight may be expressed without a unit, but may be expressed in units of g/mol depending on the molar mass.

A glass transition temperature of the acryl-based copolymer may be 45 °C to 85 °C. For specific example, the glass transition temperature of the acryl-based copolymer may be 45 °C or more, 46 °C or more, 47 °C or more, 48 °C or more, 49 °C or more, 50 °C or more, 51 °C or more, 52 °C or more, 53 °C or more, 54 °C or more, 55 °C or more, 56 °C or more, 57 °C or more, 58 °C or more, or 59 °C or more, and may be 85 °C or less, 84 °C or less, 83 °C or less, 82 °C or less, 81 °C or less, 80 °C or less, 79 °C or less, 78 °C or less, 77 °C or less, 76 °C or less, 75 °C or less, 74 °C or less, 73 °C or less, 72 °C or less, 71 °C or less, or 70 °C or less. Within this range, a resin composition containing a heterogeneous biodegradable resin may be more easily processed into a compatibilizer.

The present invention provides a molded article.

The molded article may be a biodegradable molded article molded from the resin composition, that is, a biodegradable resin composition. Herein, the molded article includes a film molded article formed through film formation as well as an injection-molded article formed through injection, etc.

The molded article may be a biodegradable film, and may be, for specific example, a mulching film for agriculture or a film for using as a food packaging material.

Hereinafter, embodiments of the present invention will be described in detail so that those skilled in the art can easily carry out the present invention. However, the present invention may be embodied in many different forms and should not be construed as being limited to the embodiments set forth herein.

### Preparation Examples and Comparative Preparation Examples: preparation of acryl-based copolymer

### Preparation Example 1

200 parts by weight of distilled water and 0.5 parts by weight of sodium dioctyl sulfosuccinate (sodium bis(2-ethylhexyl) sulfosuccinate), as an emulsifier, with respect to 100 parts by weight of a total weight of methyl methacrylate, glycidyl methacrylate, butyl acrylate and 2-ethylhexyl acrylate, which are monomers, were added into a glass reactor of 3 L volume, equipped with a thermometer, a stirrer, a dropping funnel, a nitrogen inlet tube and a reflux cooler, and were stirred. During stirring, the inside of the reactor was substituted with a nitrogen gas, then the glass reactor was heated to 70 °C., 0.2 parts by weight of potassium persulfate was added and the resultant mixture was stirred for 10 minutes.

Additionally, 45 parts by weight of methyl methacrylate, 40 parts by weight of glycidyl methacrylate, and 15 parts by weight of butyl acrylate, which are monomers, were input into a beaker, and were mixed sufficiently for 30 minutes. To this mixture, 1-octanethiol as a chain transfer agent was added in an amount of 0.5 parts by weight with respect to 100 parts by weight of the total monomers, sufficiently mixed with a stirrer, and then the resultant mixture was continuously input at equal proportions into the glass reactor for 4 hours.

Thereafter, after 4 hours of the polymerization reaction time had elapsed, the internal temperature of the glass reactor was maintained at 70° C for 30 minutes, and then cooled to room temperature. The obtained emulsion polymerization product was coagulated using a calcium acetate aqueous solution, was subjected to a heat treatment the temperature of which was increased up to 85° C, then dehydrated, and dried at 60 °C for 16 hours, thereby obtaining an acryl-based copolymer.

### Preparation Example 2

An acryl-based copolymer was obtained in the same manner as in Preparation Example 1, except that 15 parts by weight of 2-ethylhexyl acrylate was input in place of 15 parts by weight of butyl acrylate in Preparation Example 1.

### Preparation Example 3

An acryl-based copolymer was obtained in the same manner as in Preparation Example 1, except that 55 parts by weight in place of 45 parts by weight of methyl methacrylate and 30 parts by weight in place of 40 parts by weight of glycidyl methacrylate were input in Preparation Example 1.

### Preparation Example 4

An acryl-based copolymer was obtained in the same manner as in Preparation Example 1, except that 30 parts by weight in place of 45 parts by weight of methyl methacrylate and 55 parts by weight in place of 40 parts by weight of glycidyl methacrylate were input in Preparation Example 1.

### Preparation Example 5

An acryl-based copolymer was obtained in the same manner as in Preparation Example 1, except that 30 parts by weight in place of 45 parts by weight of methyl methacrylate, 55 parts by weight in place of 40 parts by weight of glycidyl methacrylate, and 15 parts by weight of 2-ethylhexyl acrylate in place of 15 parts by weight of butyl acrylate were input in Preparation Example 1.

### Preparation Example 6

An acryl-based copolymer was obtained in the same manner as in Preparation Example 1, except that 55 parts by weight in place of 45 parts by weight of methyl methacrylate, 20 parts by weight in place of 40 parts by weight of glycidyl methacrylate and 25 parts by weight of 2-ethylhexyl acrylate in place of 15 parts by weight of butyl acrylate were input in Preparation Example 1.

### Comparative Preparation Example 1

A commercially available copolymer (a copolymer of methyl methacrylate, butyl acrylate, glycidyl methacrylate and styrene) used in a preparation of masterbatch A described in Patent Document 1 was used.

### Comparative Preparation Example 2

An acryl-based copolymer was obtained in the same manner as in Preparation Example 1, except that 64 parts by weight in place of 45 parts by weight of methyl methacrylate, 2.1 parts by weight in place of 40 parts by weight of glycidyl methacrylate, and 33.9 parts by weight in place of 15 parts by weight of butyl acrylate were input in Preparation Example 1.

### Comparative Preparation Example 3

An acryl-based copolymer was obtained in the same manner as in Preparation Example 1, except that 62.3 parts by weight in place of 45 parts by weight of methyl methacrylate, 5.2 parts by weight in place of 40 parts by weight of glycidyl methacrylate, and 32.5 parts by weight of 2-ethylhexyl acrylate in place of 15 parts by weight of butyl acrylate were input in Preparation Example 1.

### Comparative Preparation Example 4

An acryl-based copolymer was obtained in the same manner as in Preparation Example 1, except that 60 parts by weight in place of 45 parts by weight of methyl methacrylate, 10 parts by weight in place of 40 parts by weight of glycidyl methacrylate, and 30 parts by weight in place of 15 parts by weight of butyl acrylate were input in Preparation Example 1.

### Examples and Comparative Examples: preparation of resin composition

### Example 1

Polybutylene adipate terephthalate (manufacturer: Xinjiang Blueridge Tunhe Chemical Industry, product name: TH801T) and polylactic acid (manufacturer: Natureworks, product name: Ingeo Biopolymer 2003D) were each dried at 60 ° C for 24 hours using an oven.

Sequentially, 80 parts by weight of polybutylene adipate terephthalate, 20 parts by weight of a polylactic acid, and 0.3 part by weight of the acryl-based copolymer obtained according to Preparation Example 1 were mixed, and was blended at 170 °C for 10 minutes at 60 rpm using a Haake Rheomix OS Lab mixer made by Thermo Electron Karlsruhe GmbH Co., Ltd. Thereafter, a resin composition was obtained by grinding the resultant mixture.

### Example 2

A resin composition was obtained in the same manner as in Example 1, except that 1.0 parts by weight in place of 0.3 parts by weight of the acryl-based copolymer obtained according to Preparation Example 1 was input in Example 1.

### Example 3

A resin composition was obtained in the same manner as in Example 1, except that 1.0 part by weight of the acryl-based copolymer obtained according to Preparation Example 2 was input, which differs from Example 1 in which 0.3 parts by weight of the acryl-based copolymer obtained according to Preparation Example 1 was input.

### Example 4

A resin composition was obtained in the same manner as in Example 1, except that 1.0 part by weight of the acryl-based copolymer obtained according to Preparation Example 3 was input, which differs from Example 1 in which 0.3 parts by weight of the acryl-based copolymer obtained according to Preparation Example 1 was input.

### Example 5

A resin composition was obtained in the same manner as in Example 1, except that 1.0 part by weight of the acryl-based copolymer obtained according to Preparation Example 4 was input, which differs from Example 1 in which 0.3 parts by weight of the acryl-based copolymer obtained according to Preparation Example 1 was input.

### Example 6

A resin composition was obtained in the same manner as in Example 1, except that 1.0 part by weight of the acryl-based copolymer obtained according to Preparation Example 5 was input, which differs from Example 1 in which 0.3 parts by weight of the acryl-based copolymer obtained according to Preparation Example 1 was input.

### Example 7

A resin composition was obtained in the same manner as in Example 1, except that 1.0 part by weight of the acryl-based copolymer obtained according to Preparation Example 6 was input, which differs from Example 1 in which 0.3 parts by weight of the acryl-based copolymer obtained according to Preparation Example 1 was input.

### Comparative Example 1

A resin composition was obtained in the same manner as in Example 1, except that the acryl-based copolymer obtained according to Preparation Example 1 was not input, which differs from Example 1.

### Comparative Example 2

A resin composition was obtained in the same manner as in Example 1, except that 1.0 part by weight of the acryl-based copolymer according to Comparative Preparation Example 1 was input, which differs from Example 1 in which 0.3 parts by weight of the acryl-based copolymer obtained according to Preparation Example 1 was input.

### Comparative Example 3

A resin composition was obtained in the same manner as in Example 1, except that 1.0 part by weight of the acryl-based copolymer obtained according to Comparative Preparation Example 2 was input, which differs from Example 1 in which 0.3 parts by weight of the acryl-based copolymer obtained according to Preparation Example 1 was input.

### Comparative Example 4

A resin composition was obtained in the same manner as in Example 1, except that 1.0 part by weight of the acryl-based copolymer obtained according to Comparative Preparation Example 3 was input, which differs from Example 1 in which 0.3 parts by weight of the acryl-based copolymer obtained according to Preparation Example 1 was input.

### Comparative Example 5

A resin composition was obtained in the same manner as in Example 1, except that 1.0 part by weight of the acryl-based copolymer obtained according to Comparative Preparation Example 4 was input, which differs from Example 1 in which 0.3 parts by weight of the acryl-based copolymer obtained according to Preparation Example 1 was input.

### Experimental Examples

### Experimental Example 1

A glass transition temperature, a molecular weight, and an epoxy equivalent weight of each of the acryl-based copolymers prepared according to Preparation Examples 1 to 6 and Comparative Preparation Examples 2 to 4, were measured by following methods, and the measurement results are listed in Table 1 below along with a monomer composition.

In addition, the glass transition temperature, the molecular weight, and the epoxy equivalent weight of the copolymer according to Comparative Preparation Example 1 were measured, and the measurement results are listed in Table 1 below.
* Glass transition temperature(°C): the glass transition temperature was measured with a differential scanning calorimeter (manufacturer: TA Instruments, model name: DSC 250), by: inputting 8 mg (error range 1 mg) of a sample of each of the acryl-based copolymers prepared according to Preparation Examples and Comparative Preparation Examples input; primarily heating up to 300 °C under a nitrogen stream at a temperature increase rate of 10 °C/min; cooling to 0 °C at a temperature decrease rate of 10 °C/min; and secondarily heating up to 300 °C at a temperature increase rate of 10 °C/min.
* Weight average molecular weight and number average molecular weight: the weight average molecular weight and the number average molecular weight of the obtained acryl-based copolymer sample were measured for under following conditions using gel permeation chromatography (GPC, PL GPC220, made by Agilent Technologies Co., Ltd). In this case, a part of a solution dissolved in the solvent, tetrahydrofuran (Stabilized with BHT) at a concentration of 2 mg/ml, was taken and used as a sample.
   - Column: PL MiniMixed B X 2
   - Solvent: Tetrahydrofuran (Stabilized with BHT)
   - Flow rate: 0.3 ml/min
   - Concentration of sample: 2.0 mg/ml
   - Column temperature: 40 °C
   - Detector: Waters 2414 Refractive Index Detector
   - Data processing: Empower
   - Calibration curve: using polystyrene standards (nine types of molecular weights: 2,000 / 10,000 / 30,000 / 70,000 / 200,000 / 700,000 / 2,000,000 / 4,000,000 / 10,000,000)
* Epoxy equivalent weight (g/eq): an amount ratio (molar ratio) of glycidyl methacrylate was measured using 700 MHz NMR spectrometer made by Bruker Co., Ltd. according to the nuclear magnetic resonance spectroscopy, an equivalent number (eq/mol) of an epoxy group was obtained from the measured values, and an epoxy equivalent weight (g/eq) was calculated by using the number average molecular weight (Mn) measured above.

**Table 1**

| Classificat ion | Monomer composition | | | | Glass transit ion tempera ture | Weight average molecul ar weight | Epoxy equival ent weight |
|---|---|---|---|---|---|---|---|
| | MMA¹⁾ | GMA²⁾ | BA³⁾ | 2-EHA⁴⁾ | | | |
| | (wt%) | | | | (°C) | (g/mol) | (g/eq) |
| Preparation Example 1 | 45.0 | 40.0 | 15.0 | - | 65 | 33,000 | 355 |
| Preparation Example 2 | 45.0 | 40.0 | - | 15.0 | 57 | 33,000 | 355 |
| Preparation Example 3 | 55.0 | 30.0 | 15.0 | - | 68 | 33,000 | 471 |
| Preparation Example 4 | 30.0 | 55.0 | 15.0 | - | 57 | 33,000 | 258 |
| Preparation Example 5 | 30.0 | 55.0 | - | 15.0 | 52 | 33,000 | 259 |
| Preparation Example 6 | 55.0 | 20.0 | - | 25.0 | 47 | 30,000 | 708 |
| Comparative Preparation Example 1 | - | | | | 54 | 6,800 | 285 |
| Comparative Preparation Example 2 | 64.0 | 2.1 | 33.9 | - | 35 | 30,000 | 6,796 |
| Comparative Preparation Example 3 | 62.3 | 5.2 | - | 32.5 | 34 | 30,000 | 2,712 |
| Comparative Preparation Example 4 | 60.0 | 10.0 | 30.0 | - | 39 | 28,000 | 1,414 |
| 1) MMA: methyl methacrylate | | | | | | | |
| 2) GMA: glycidyl methacrylate | | | | | | | |
| 3) BA: butyl acrylate | | | | | | | |
| 4) 2-EHA: 2-ethylhexyl acrylate | | | | | | | |

### Experimental Example 2

A melt flow ratio, a melting enthalpy (ΔHm), and a number and size of domains, for the resin compositions prepared according to Examples 1 to 7 and Comparative Examples 1 to 5 were measured in the following ways, and the measurement results were listed in Table 2 below.
* Melt flow ratio (MFR): the melt flow ratios were measured of the obtained resin composition samples, according to ISO 1133(190 °C, 5 kg) using MI-4, which is a melt flow indexer, made by Gottfert Co., Ltd.
* Melting enthalpy (ΔHm): the melting enthalpy (ΔHm) was measured with a differential scanning calorimeter (DSC), by: inputting 8 mg (error range 1 mg) of a sample of each of the acryl-based copolymers prepared according to Preparation Examples and Comparative Preparation Examples; primarily heating up to 180 °C under a nitrogen stream at a temperature increase rate of 10 °C/min; sequentially cooling to -50 °C at a temperature decrease rate of 10 °C/min; and secondarily heating up to 180 °C at a temperature increase rate of 10 °C/min.
* Number and size of domains: number and a size of domains were measured by: preparing a thin slice using a microtome; preparing specimens by staining with osmium tetroxide vapor; capturing images at magnification of 25,000 for the specimens using a transmission electron microscope; and counting the number and measuring the size of the domains by using Image J software. In this case, when counting the number and measuring the size of domains, the domain to be counted is a domain exhibiting brightness of 9 or more selected from among domains having a long diameter of 150 nm or more in the transmission electron microscopy image, where the brightness is divided into black as 0, and white as 10. The domain size is an arithmetic average value of the sizes with respect to major axis of each domain.

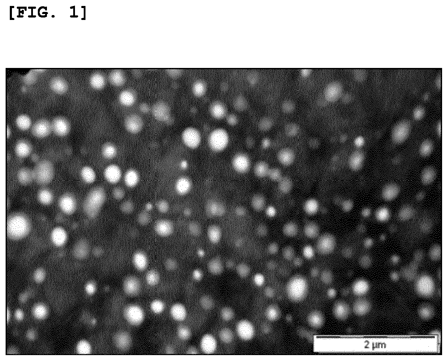

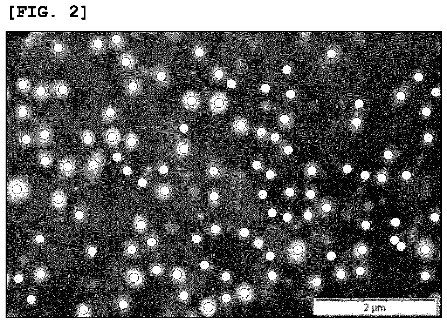

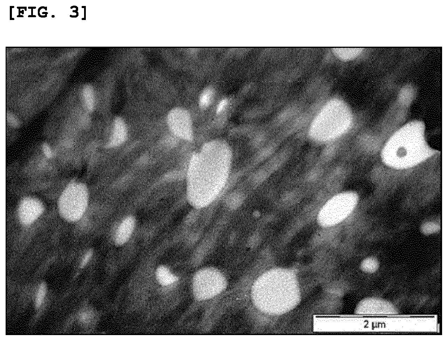

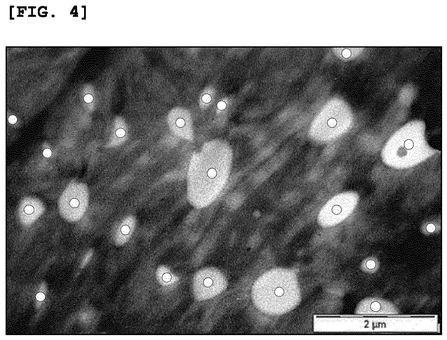

The images obtained by image-capturing of the resin compositions according to Example 2 and Comparative Example 1 at a magnification of 25,000 using the transmission electron microscope were shown in FIG. 1 (Example 2) and FIG. 3(Comparative Example 1), and images showing domains marked for counting the number and measuring the size of the domains were shown in FIG. 2 (Example 2) and FIG. 4(Comparative Example 1), respectively.

**Table 2**

| Classificat ion | Melt flow ratio | Melting enthalpy (ΔHm) | Number of domains | Domain size |
|---|---|---|---|---|
| | (g/10 min) | (J/g) | (number) | (nm) |
| Example 1 | 11.3 | 0.4 | 70 | 480 |
| Example 2 | 6.9 | 0.2 | 105 | 280 |
| Example 3 | 6.7 | 0.2 | 100 | 282 |
| Example 4 | 7.6 | 0.3 | 90 | 400 |
| Example 5 | 5.0 | 0.1 | 125 | 210 |
| Example 6 | 4.8 | 0.1 | 135 | 200 |
| Example 7 | 10.6 | 0.5 | 60 | 600 |
| Comparative Example 1 | 14.3 | 4.1 | 19 | 732 |
| Comparative Example 2 | 0.0 | 0.2 | 107 | 230 |
| Comparative Example 3 | 14.2 | 4.0 | 19 | 740 |
| Comparative Example 4 | 14.2 | 4.0 | 20 | 710 |
| Comparative Example 5 | 14.0 | 3.9 | 24 | 700 |

As shown in Table 2, it can be seen that the melt flow ratio of the resin composition prepared according to Examples 1 to 7 of the present invention exhibits a value in the range from 3.0 g/10 min to 13.5 g/10 min, the melting enthalpy exhibits a value in the range from 0.01 J/g to 3.6 J/g, the number of domains is 50 or more, and the domain size is 650 nm or less.

Meanwhile, it can be seen the melt flow ratio of the resin compositions prepared according to Comparative Examples 1 and 3 to 5 is above 13.5 g/10 min, the melting enthalpy is also above 3.6 J/g, the number of domains is in a range of 19 to 24, and the domain size is 700 nm or more.

Particularly, it can be seen that the resin composition prepared according to Comparative Example 2, containing a copolymer prepared according to Comparative Preparation Example 1 had a very low melt flow ratio, such that the melt flow ratio did not appear, due to a rapid increase in viscosity.

### Experimental Example 3

A molecular weight, a molecular weight distribution, a tensile strength, and an elongation of the resin compositions prepared according to Examples 1 to 7 and Comparative Examples 1 to 5, were measured in the following way, and the measurement results are listed in Table 3 below.

* Weight average molecular weight, and molecular weight increase rate: the weight average molecular weight of the obtained resin composition samples was measured under following conditions using gel permeation chromatography (GPC, PL GPC220, made by Agilent Technologies Co., Ltd.). In this case, a part of a solution obtained by dissolving in a solvent, which is chloroform, at a concentration of 1 mg/ml, was taken and used as a sample.
- Column: PL MiniMixed B X 2
- Solvent: Chloroform
- Flow rate: 1.0 ml/min
- Concentration of sample: 1.0 mg/ml
- Column temperature: 40 °C
- Detector: Waters 2414 Refractive Index Detector
- Data processing: Empower
- Calibration curve: using polystyrene standards (nine types of molecular weights: 2,000 / 10,000 / 30,000 / 70,000 / 200,000 / 700,000 / 2,000,000 / 4,000,000 / 10,000,000)

In addition, the increase rate of the weight average molecular weights measured for the resin compositions according to Examples 1 to 7 and Comparative Examples 2 to 5 with respect to the weight average molecular weight measured for the resin composition according to Comparative Example 1, in which no acryl-based copolymer was input, was calculated according to Equation 1 below, and the calculated results were listed. Molecular weight increase rate = (weight average molecular weights measured for the resin compositions according to Examples 1 to 7 and Comparative Examples 2 to 5/weight average molecular weight measured for the resin composition according to Comparative Example 1) × 100
* Tensile strength and elongation: the obtained resin compositions were each put into a mold having a size of 130 mm X 130 mm X 2 mm, preheated at 180 °C for about 5 minutes, then compression processed under a compressive load condition of 20 MPa for 3 minutes, and then quenched at room temperature to prepare specimens. The prepared specimens were prepared as test specimens according to ASTM D638, and Type 4 standard, and the elongation and the tensile strength were measured with a universal physical property tester (Instron 3365) made by Instron Co., Ltd. under the condition of 50 mm/min according to the ASTM D638 standards.

**Table 3**

| Classificat ion | Weight average molecular weight | Molecular weight increase rate | Tensile strength | Elongation |
|---|---|---|---|---|
| | (g/mol) | (Index) | (kgf/cm²) | (%) |
| Example 1 | 141,000 | 104 | 334 | 675 |
| Example 2 | 150,000 | 111 | 392 | 670 |
| Example 3 | 152,000 | 113 | 385 | 670 |
| Example 4 | 145,000 | 107 | 360 | 670 |
| Example 5 | 159,000 | 118 | 400 | 665 |
| Example 6 | 159,000 | 118 | 410 | 665 |
| Example 7 | 141,000 | 104 | 300 | 665 |
| Comparative Example 1 | 135,000 | 100 | 230 | 670 |
| Comparative Example 2 | 175,000 | 130 | 393 | 590 |
| Comparative Example 3 | 135,000 | 100 | 233 | 670 |
| Comparative Example 4 | 135,000 | 100 | 233 | 670 |
| Comparative Example 5 | 138,000 | 102 | 243 | 670 |

As shown in Tables 2 and 3 above, it can be confirmed that the resin compositions prepared according to Examples 1 to 7 having the melt flow ratio and the number of domains, which falls within the range defined in the present invention, has rather excellent tensile strength while maintaining the elongation to be equal or greater than the elongation of the resin composition according to Comparative Examples 1 and 3 to 5 having the melt flow ratio and the number of domains, which are out of the range defined in the present invention.

On the other hand, it can be confirmed that the resin composition according to Comparative Example 2 containing the copolymer disclosed in Patent Document 1 as a compatibilizer has a significantly increased weight average molecular weight, compared to the resin composition prepared according to Comparative Example 1 containing no compatibilizer, and thus exhibited increased tensile strength, but the elongation rapidly decreased compared to the resin compositions according to Examples 1 to 7, which contain the same amount of the acryl-based copolymer. This is expected to be due to the fact that the copolymer, which is the compatibilizer in the resin composition according to Comparative Example 2, not only formed PBAT-g-PLA due to the high reactivity of the copolymer, but also acted as a chain extender for each resin to form a large amount of PBAT-g-PBAT and/or PLA-g-PLA, thereby rapidly increasing the molecular weight.

It can also be seen that the resin compositions according to Examples 1 to 7, have the increased weight average molecular weights compared to that of Comparative Example 1. This is due to the fact that the acryl-based copolymer, which is a compatibilizer, induced chemical bonding at the interface between polybutylene adipate terephthalate and poly lactic acid, thereby functioning as a chain extender.

On the other hand, it can be seen that the resin compositions according to Comparative Examples 3 to 5 do not have an increase in the weight average molecular weight compared to that of Example 1 or have a slight increase in the weight average molecular weight. This shows that even though the acryl-based copolymer, which is a compatibilizer, is used, the effect of the increase in the molecular weight does not appear when the melt flow ratio and the number of domains of the resin composition are not capable of being adjusted within the ranges defined in the present invention.

With respect to these results, it can be seen the compatibility between the homogeneous biodegradable resins is improved, and thus the resin composition is excellent in the processibility by preventing an increase in the viscosity while having improved mechanical properties.

## Claims

1. A resin composition comprising a continuous phase and a dispersed phase,
wherein the continuous phase includes a first biodegradable resin,
the dispersed phase includes a second biodegradable resin,
a melt flow ratio, as measured with a load of 5 kg at 190 °C according to ISO 1133 is 3.0 g/10 min to 13.5 g/10 min, and
number of domains of a dispersed phase is 35 or more, when observing an image obtained by image-capturing at a magnification of 25,000 using transmission electron microscope (TEM) .

2. The resin composition of claim 1,
wherein the first biodegradable resin comprises an aliphatic polyester unit and an aromatic polyester unit.

3. The resin composition of claim 1,
wherein the first biodegradable resin comprises polybutylene adipate terephthalate.

4. The resin composition of claim 1,
wherein the second biodegradable resin comprises polylactic acid.

5. The resin composition of claim 1,
wherein, with respect to 100 parts by weight of a sum of the first biodegradable resin and the second biodegradable resin, the first biodegradable resin is included in an amount of 50 part by weight to 90 parts by weight, and the second biodegradable resin is included in an amount of 10 parts by weight to 50 parts by weight.

6. The resin composition of claim 1,
wherein a melt flow ratio of the resin composition is 4.5 g/10 min to 12.0 g/10 min, as measured with a load of 5 kg at 190 °C according to ISO 1133.

7. The resin composition of claim 1,
wherein a domain size of the dispersed phase observed in an image obtained by image-capturing at a magnification rate of 25,000 using transmission electron microscope (TEM) is 700 nm or less.

8. The resin composition of claim 1,
Wherein a melting enthalpy (ΔHm) is 0.01 J/g to 3.6 J/g, as measured using a differential scanning calorimeter (DSC) by adding 8 mg (error range of 1 mg) of a sample with error range of 1 mg, primarily heating up to 180 °C at a temperature increase rate of 10 °C/min under a nitrogen stream, then cooling to -50 °C at a temperature decrease rate of 10 °C/min, and secondarily heating up to 180 °C at a heating rate of 10 °C/min.

9. The resin composition of claim 1,
wherein a weight average molecular weight of the entire resin composition is 137,000 to 200,000.

10. The resin composition of claim 1,
wherein a tensile strength of the resin composition is 245 kgf/cm² to 500 kgf/cm², as measured at a tensile speed of 50 mm/min according to ASTM D638.

11. The resin composition of claim 1, further comprising at least one among an acryl-based copolymer and a compatibilized part derived from the acryl-based copolymer.

12. The resin composition of claim 11,
wherein the acryl-based copolymer includes a methyl (meth)acrylate monomer unit, a (meth)acrylate monomer unit containing an epoxy group, and an alkyl (meth)acrylate-based monomer unit having 2 to 10 carbon atoms.

13. The resin composition of claim 11,
wherein the acryl-based copolymer includes 25 wt% to 65 wt% of a methyl (meth)acrylate monomer unit, 15 wt% to 60 wt% of a (meth)acrylate monomer unit containing an epoxy group, and 5 wt% to 32 wt% of an alkyl (meth)acrylate-based monomer unit having 2 to 10 carbon atoms.

14. The resin composition of claim 11,
wherein, with respect to 100 parts by weight of a sum of the first biodegradable resin and the second biodegradable resin, the acryl-based copolymer and the compatibilized part derived from the acryl-based copolymer are included in an amount of 0.01 part by weight to 10 parts by weight.

15. The resin composition of claim 11,
wherein an epoxy equivalent weight (E.E.W) of the acryl-based copolymer is 200 g/eq to 800 g/eq.

16. The resin composition of claim 11,
wherein a weight average molecular weight of the acryl-based copolymer is 10,000 to 100,000.

17. The resin composition of claim 11,
wherein a glass transition temperature of the acryl-based copolymer is 45 °C to 85 °C.

18. A molded article molded from the resin composition according to any one of claims 1 to 17.
